# EUROPEAN PATENT SPECIFICATION

(11) **EP 4 438 152 B1**
(45) Date of publication and mention of the grant of the patent: **19.11.2025**
(21) Application number: 23166254.5
(22) Date of filing: 31.03.2023
(51) Int. Cl.: B01D 29/64, B01D 33/46

(54) **FILTER**
FILTER
FILTRE

(43) Date of publication of application: 02.10.2024
(73) Proprietor: Aquaphor International OÜ, 40231 Sillamäe (EE)
(72) Inventor: SHMIDT, Joseph, 40231 Sillamäe (EE); RUSINOV, Gleb, 40231 Sillamäe (EE); LEICHENKO, Gleb, 40231 Sillamäe (EE)
(74) Representative: Danubia Patent & Law Office LLC

(56) References cited:
- CN-U- 215 842 195
- KR-A- 20150 056 391
- US-A1- 2015 265 952
- US-A1- 2017 368 483

## Description

Embodiments relate to filters for liquid purification, for example, for removing mechanical impurities. More specifically, the invention is directed to pre- or postfilters to be used in industrial systems, for example, washing system, or to household use.

### BACKGROUND

During washing in industrial washing machines, at oil filtering or various materials separation, filters become clogged with therein impurities from the main equipment and break. It is necessary either to change the cartridge, or to flush it. From the prior art filters are known with backwashing and equipped with outer and inner mechanical scrubbing means.

A filter from the patent US2354150 (IPC B01D29/15, published 18.07.1944, priority: 13.09.1941, applicant Ralph N. Skinner) is known from the prior art. The filter for oil filtration comprises a body with filter elements, outer scrubbing means with a brush, a reduction gear unit and an electric motor. In the lower part of the body there is an inlet for contaminated oil. In the upper part of the body there is an outlet for purified oil. Lower part of the body has a conical section - a sediment chamber with a dismountable drain plug. Vertical six-filter elements are made as a number of paper disks attached to each other with a spring. The brush is made to scrub an outer surface of the filter elements. The filter elements and the brush rotate by means of the reduction gear unit, which is connected to said electric motor.

The filter from the patent US2354150 operates as follows. Contaminated oil under pressure is supplied into the filter body, purifies while flowing through the filter elements, and exits for reuse. Contaminants, which are separated during filtration process, partly flow into the sediment chamber and are removed through the drain plug. Overall, on the surface of the filter elements forms a contaminants layer. To decrease the degree of clogging of the filter elements and to prolong lifetime of the filter, the filter is equipped with the mechanical scrubbing means, that rotates in the same direction as the filter elements. The brush sweeps the dirt from the outer surface and the dirt flows into the lower part of the filter body.

The drawback of the filter is that it is equipped only with outer mechanical scrubbing means, made as the brush. This brush removes the dirt layer only from the outer surface while partly pushing the dirt particles into the pores of the paper disks leading to their clogging.

A rotary screen from the patent JP2015139743 (IPC B07B1/22; B07B1/52; B07B1/55, published 03.08.2015, priority: 28.01.2014, applicant MIIKE IRON WORKS CO LTD) is known from the prior art. This rotary screen is constructed to prevent clogging even if a moisture content of a processed product is high. The rotary screen comprises a body with a loading part and an outlet. The body is mounted to the base. A drum filter is installed into the body. Said filter is equipped with an inner mechanical scrubbing means. A console with rotating nozzles is constructed in the upper part of the body. Inner mechanical scrubbing means is made as a bottle brush and is connected to an electric motor. An air duct is formed inside of the console.

The filter from the patent JP2015139743 operates as follows. A mixture of particles of different shape and size is supplied into the loading part. Those particles which are smaller than the size of the mesh elements go through the mesh elements and are supplied to the consumption. The particles which are bigger than the size of the mesh elements remain inside the drum. Then the inner mechanical scrubbing means is used to scrub the bigger particles from the inner surface of the drum and air is supplied through the nozzles. That is, the particles are swept away from the inner surface of the drum and are dried with the air.

The main drawback of the invention from the patent JP2015139743 is that the mechanical scrubbing means is located only inside the drum filter. As the air force from the outer side of the drum might be inappropriate to knock out bigger particles from the clogged mesh elements, a part of said mesh elements remains out of order.

A similar filter is known from the patent RU 2424845 (IPC B01D 27/00, B01D 29/66, published. 27.07.2011, priority: 20.10.2006, applicant Honeywell Technologies Sarl Ekk). Said filter from the patent RU 2424845 is intended for liquid filtration, for example, water, including household systems. The filter comprises a body, a filter element, a prefilter, cross flow setup means, and one or more guiding elements to force liquid to flow along a circular or spiral path. A ball valve is made in the lower part of the body. The cross flow setup means is made as a rotor and a hollow body with apertures for liquid outflow inserted in it.

The filter from the patent RU 2424845 operates as follows. Liquid flows though the inlet into the body, then through the filter element and finally flows out of the outlet purified from mechanical impurities. After a certain period of time, the filter is backflushed. The ball valve is manually opened. Due to the liquid pressure, the rotor goes down, closes the lower part of the filtration element, and remains in this position. The liquid circulates down rotating the rotor and cross flow setup means for the liquid flow, which sweeps the contaminants from the surface of the filtration element. Liquid with contaminates flows out into drainage.

The drawback of the invention from the patent RU 2424845 is the complicated structure of the crossflow setup means and the manual control of backwashing process. In case the rotor is out of order, its rotation speed and the frequency of rotation of the rotor and cross flow setup means will change or the rotor can even stop. That is, the backwashing process will change or even be interrupted, too.

A rotating cylindrical mesh filter is known from US Patent Application No. 2015/0265952 A1, regarded as the closest prior art. The filter has outer and inner brushes to automatically clean the inner surface and the outer surface of the mesh filter. The outer brush includes bristles adapted to penetrate into and through the mesh openings.

Similar technical solutions are disclosed in US Patent Application No. 2017/368483 A1, Korean Patent Application No. 20150056391 A and Chinese Utility Model No. 215842195U.

A common drawback of the above solutions is that backwashing is not enough to clean properly the surface of the cartridges. Only outer or only inner scrubbing means cannot scrub all the contaminants away, as impurities may form a biofilm. Moreover, biofilm formation can take place on both sides of the filter cartridges. The biofilm is the base for new layers of contaminants. And layer by layer, the biofilm formation leads to partial or total clogging of the filter cartridges. Thus, users need to change the filter cartridges often. Changing of filter cartridges is a costly and complicated process.

### SUMMARY

The goal of the invention and the achieved technical result is the development of a new filter. A further goal is to provide a filter with increased filter durability.

The above goals are achieved by constructing a filter in accordance with claim 1. Further preferred embodiments of the filter according to the present invention are set forth in claims 2 to 11.

### DRAWINGS

To further clarify the above and other advantages and features of the present invention, a more particular description of the invention will be rendered by reference to the drawings located in the specification. It is appreciated that these drawings depict only typical characteristics of the invention and are therefore not to be considered limiting of its scope. The drawings described herein are for illustrative purposes only of selected embodiments and not all implementations and are not intended to limit the scope of the present disclosure.

The invention will be described and explained with additional specificity and detail with the accompanying drawings in which:
Figure 1 is a cross-sectional view of a possible embodiment of the filter according to the invention.
Figure 2 is an exploded view of the filter element with representations about how it is scrubbed with the inner and outer scrubbing means.
Figure 3 is an exploded view of the inner scrubbing means and the flush means, wherein the flush means is integrated with the inner scrubbing means.

Corresponding reference numerals indicate corresponding parts throughout the views of the drawings.

### DETAILED DESCRIPTION

Reference will now be made in detail to some various embodiments of the present invention, examples of which are illustrated in the accompanying drawings.

Furthermore, in the following detailed description of the present invention, numerous specific details are set forth to provide a thorough understanding thereof. Well-known methods, procedures, components, and circuits have not been, however, described in detail so as not to unnecessarily obscure aspects of the present disclosure.

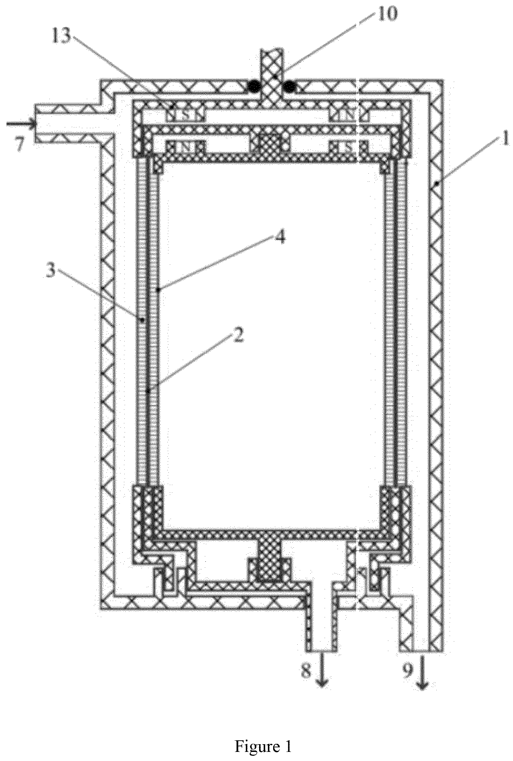

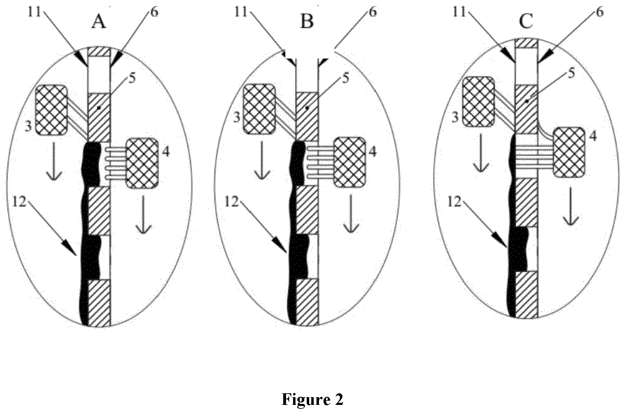

A possible embodiment is a filter with double-sided mechanical or semi-mechanical scrubbing means. This filter comprises a body 1 with a filter element 2 arranged inside. The filter element 2 is equipped with at least one outer scrubbing means 3 and at least one inner scrubbing means 4. For effective contaminants scrubbing from both surfaces of the filter element 2, the scrubbing means 3 and 4 can be made as brushes (Figure 1 and 2), sponges, blades, or scrapers (not shown in the figures). Bristles of the brushes can be of different length - longer than the thickness of the filter element side walls (Figure 2, C), shorter (Figure 2, A) or about the same length (Figure 2, B) as the thickness of the filter element sidewalls.

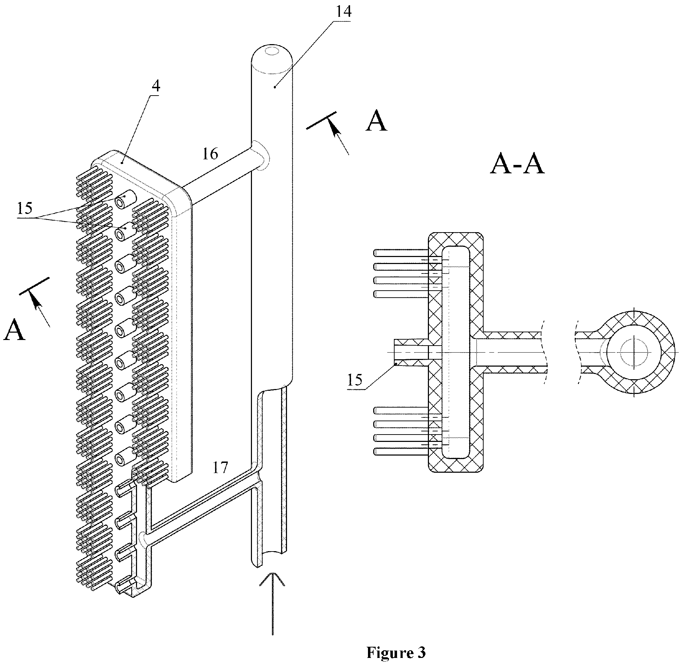

Additionally, the inner scrubbing means 4 can be equipped with at least one flushing means (Figure 3) for backwashing said filter element 2. This flushing means can be made as a tube 14 with a channel inside and two side tubes 16 and 17 with channels inside and apertures forming nozzles 15 or spigots (not shown). Said flushing means can be made as a separate construction (not shown) or be integrated with the mechanical inner scrubbing means 4 (Figure 3). Also, the flushing means can be made as a separate part of the filter (not shown), for example a nozzle or an injector, etc.

The body 1 of the filter is made with an inlet 7 of raw liquid, an outlet 8 of purified liquid and an outlet 9 for drainage. The body 1 can be made of, for example, but not limited to, metal, for example, stainless steel or brasses, polymeric materials, for example polyolefins or any co-polymers thereof.

The filter element 2 may be made as a mesh from metal or polymeric material. The filter element 2 may be cylindrical in shape, wherein the sidewall of the cylinder are made of a mesh. The mesh may be made corrugated to increase the surface. Any of the inner and the outer scrubbing means 4, 3 may be formed with a corrugated surface or can have an ability to wriggle. The filter element 2 can be made as mesh disks (not shown).

The inner and the outer scrubbing means 4, 3 move due to, for example, but not limited to, electric driver 10 and a magnet 13 (Figure 1) or a planetary drive. The filter element 2 and the inner and the outer scrubbing means 4, 3 move towards each other due to rotation (in the same or opposite direction) and/or translational motion of either the filter element 2 or the inner and outer scrubbing means 4, 3.

Within the scope of the distinguishing features, the said embodiment of the filter works as follows. Raw liquid flows into the body 1 through inlet 7 and then flows through the filter element 2. Liquid purified from mechanical contaminants flows out from the purified liquid outlet 8 of the filter element 2 and through the purified liquid outlet of the body 1 (Figure 1).

Mechanical impurities remain on the filter element's surface. As the filter element 2 clogs after a given period of time, a controller or a control panel of a water purification system, in which the filter element 2 may be installed, sends a signal to perform backwashing of the filter element 2.

The inner and outer scrubbing means 4, 3 may move around the filter element 2 which is fixed. Besides this, any of the scrubbing means 4, 3 may spin. Additionally, the filter element 2 may spin too.

Also, scrubbing is done, when the filter element 2 and the scrubbing means move translationally against each other - the filter element 2, for example, can move up and the scrubbing means move down, or vice versa.

During a filtration process, contaminants form dense plugs 12 on inner and outer surfaces 6, 11 of the filter element 2 and accumulate inside the mesh elements. The scrubbing means are accomplished to remove inner contaminants 13 and the dense plugs 12 from the inner and the outer surface 6, 11 of the filter element 2.

The inner and the outer scrubbing means 4, 3 start to move along the filter element surface, removing mechanical contaminants. The start can be triggered by a signal of the control panel/controller received by said scrubbing means. Said signal can be provided by a timer of the controller (i.e. to start the move, the timer transmits a signal from time to time). Alternatively, the operator or user may press a button on the control panel of the water purification system which represent a signal for the controller to transmit a trigger for the start of the move. Or, said scrubbing means may be move-not-stop means. In such a case e.g. installing the cartridge on the water purification system forms itself the trigger. As is clear, the skilled person in the art thus has many different ways to provide the trigger for starting the required move. The inner scrubbing means 4 penetrates inside the mesh elements, pushing contaminants out (Figure 2). The outer scrubbing means 3 scrubs all the dirt (inner and outer) from the surface of the filter element 2. In case of high concentration of contaminants, any of the scrubbing means 3, 4 may operate during the whole filtration process.

For example, when the inner scrubbing means 4 rotates, the bristles of the brush scrub the contaminants from the surface of the filter element 2 and penetrate at least partially into the inner space, or the openings of the mesh elements and, thus, totally remove all the contaminants (Figure 2). In case when the outer scrubbing means 3 is made in the form of a sponge (not shown), it is pressed against the filter elements surface and removes contaminants partly from the inner space of the mesh elements too.

In case the filter is also equipped with at least one flushing means (Figure 3), it further helps to remove contaminants. All drainage liquid flows out from the drainage outlet 9. The liquid flows along the channel of the tube 14 and then separates into two flows in the channels inside the two side tubes 16 and 17 (Figure 3) and, through the nozzles 15 or spigots, spreads between brushes and washes away the dirt.

Due to such an effective scrubbing, most of the elements remain clean and hence active, that is, durability of the filter elements and thus the filter increases.

The foregoing description, for the mere purpose of explanation, has been provided with reference to specific embodiments. However, the illustrative discussions above are not meant to be exhaustive or to limit the invention to the embodiment disclosed. Many modifications and variations are possible in view of the above teachings. The embodiments were chosen and described to best explain the basic principles of the invention and its practical applications, to enable thereby the skilled person in the art to best utilize the invention and the various embodiments with various modifications as may be suited to the particular use contemplated.

## Claims

1. A filter comprising a body (1), a filter element (2) with an inner surface (6) and an outer surface (11) arranged within the body (1), and inner and outer scrubbing means (4, 3) movable along the respective surface (6, 11) of the filter element (2) and configured thereby to perform a double-sided scrubbing of said filter element (2) on both surfaces (6, 11) thereof, **characterized in that** the filter further comprises flushing means for backwashing the filter element (2), the flushing means being integrated with the inner scrubbing means (4).

2. The filter according to claim 1, **characterized in that** the inner scrubbing means (4) is configured to penetrate into the openings of the filter element (2).

3. The filter according to claim 1 or 2, **characterized in that** the inner scrubbing means (4) is made as a brush.

4. The filter according to any of the preceding claims, **characterized in that** the outer scrubbing means (3) is made as any of a brush, sponge, blade, or scraper.

5. The filter according to any of the preceding claims, **characterized in that** said filter further comprises flushing means for backwashing the filter element (2).

6. The filter according to any of the preceding claims, **characterized in that** the filter element (2) is made in the form of a mesh made of metal and/or polymeric materials.

7. The filter according to any of the preceding claims, **characterized in that** the filter element (2) is made in the form of a corrugated mesh.

8. The filter according to any of the preceding claims, **characterized in that** the filter element (2), as well as the inner and the outer scrubbing means (4, 3) are configured to be moved by a translational motion of the respective one of the filter element (2), the inner scrubbing means (4) and the outer scrubbing means (3).

9. The filter according to any of the preceding claims, **characterized in that** the filter element (2) is cylindrical.

10. The filter according to claim 9, **characterized in that** the filter element (2) is made in the form of at least one mesh disc.

11. The filter according to any of claims 1 to 8, **characterized in that** the filter element (2), as well as the inner and the outer scrubbing means (4, 3) are configured to be moved by a rotational motion of the respective one of the filter element (2), the inner scrubbing means (4) and the outer scrubbing means (3).

## Patentansprüche

1. Filter, der einen Körper (1), ein Filterelement (2) mit einer Innenoberfläche (6) und einer Außenoberfläche (11), das innerhalb des Körpers (1) angeordnet ist, und innere und äußere Schrubbmittel (4, 3), die entlang der jeweiligen Oberfläche (6, 11) des Filterelements (2) beweglich sind, umfasst, und dadurch konfiguriert sind, ein doppelseitiges Schrubben des Filterelements (2) auf beiden Oberflächen (6, 11) davon durchzuführen, **dadurch gekennzeichnet, dass** der Filter weiter Spülmittel zum Rückspülen des Filterelements (2) umfasst, wobei die Spülmittel in die inneren Schrubbmittel (4) integriert sind.

2. Filter nach Anspruch 1, **dadurch gekennzeichnet, dass** das innere Schrubbmittel (4) konfiguriert ist, um in die Öffnungen des Filterelements (2) einzudringen.

3. Filter nach Anspruch 1 oder 2, **dadurch gekennzeichnet, dass** das innere Schrubbmittel (4) als Bürste ausgeführt ist.

4. Filter nach einem der vorstehenden Ansprüche, **dadurch gekennzeichnet, dass** das äußere Schrubbmittel (3) als eines von einer Bürste, Schwamm, Klinge oder Schaber ausgeführt ist.

5. Filter nach einem der vorstehenden Ansprüche, **dadurch gekennzeichnet, dass** der Filter weiter Spülmittel zum Rückspülen des Filterelements (2) umfasst.

6. Filter nach einem der vorstehenden Ansprüche, **dadurch gekennzeichnet, dass** das Filterelement (2) in Form eines Netzes ausgeführt ist, das aus Metall und/oder Polymermaterialien gefertigt ist.

7. Filter nach einem der vorstehenden Ansprüche, **dadurch gekennzeichnet, dass** das Filterelement (2) in Form eines gewellten Netzes ausgeführt ist.

8. Filter nach einem der vorstehenden Ansprüche, **dadurch gekennzeichnet, dass** das Filterelement (2) sowie die inneren und äußeren Schrubbmittel (4, 3) konfiguriert sind, um durch eine Vorschubbewegung des jeweiligen von dem Filterelement (2), dem inneren Schrubbmittel (4) und dem äußeren Schrubbmittel (3) bewegt zu werden.

9. Filter nach einem der vorstehenden Ansprüche, **dadurch gekennzeichnet, dass** das Filterelement (2) zylindrisch ist.

10. Filter nach Anspruch 9, **dadurch gekennzeichnet, dass** das Filterelement (2) in Form mindestens einer Netzscheibe gebildet ist.

11. Filter nach einem der Ansprüche 1 bis 8, **dadurch gekennzeichnet, dass** das Filterelement (2) sowie die inneren und äußeren Schrubbmittel (4, 3) konfiguriert sind, um durch eine Drehbewegung des jeweiligen von dem Filterelement (2), dem inneren Schrubbmittel (4) und dem äußeren Schrubbmittel (3) bewegt zu werden.

## Revendications

1. Filtre comprenant un corps (1), un élément filtrant (2) avec une surface interne (6) et une surface externe (11) agencé à l'intérieur du corps (1), et des moyens de nettoyage interne et externe (4, 3) mobiles le long de la surface respective (6, 11) de l'élément filtrant (2) et configurés ainsi pour effectuer un nettoyage double face dudit élément filtrant (2) sur ses deux surfaces (6, 11), **caractérisé en ce que** le filtre comprend en outre des moyens de rinçage pour laver à contre-courant l'élément filtrant (2), les moyens de rinçage étant intégrés au moyen de nettoyage interne (4).

2. Filtre selon la revendication 1, **caractérisé en ce que** le moyen de nettoyage interne (4) est configuré pour pénétrer dans les ouvertures de l'élément filtrant (2).

3. Filtre selon la revendication 1 ou 2, **caractérisé en ce que** le moyen de nettoyage interne (4) est réalisé sous la forme d'une brosse.

4. Filtre selon l'une quelconque des revendications précédentes, **caractérisé en ce que** le moyen de nettoyage externe (3) est réalisé sous la forme d'une brosse, d'une éponge, d'une lame ou d'un racleur.

5. Filtre selon l'une quelconque des revendications précédentes, **caractérisé en ce que** ledit filtre comprend en outre des moyens de rinçage pour laver à contre-courant l'élément filtrant (2).

6. Filtre selon l'une quelconque des revendications précédentes, **caractérisé en ce que** l'élément filtrant (2) est réalisé sous la forme d'un treillis métallique et/ou de matériaux polymères.

7. Filtre selon l'une quelconque des revendications précédentes, **caractérisé en ce que** l'élément filtrant (2) est réalisé sous la forme d'un treillis ondulé.

8. Filtre selon l'une quelconque des revendications précédentes, **caractérisé en ce que** l'élément filtrant (2), ainsi que les moyens de nettoyage interne et externe (4, 3) sont configurés pour être déplacés par un mouvement de translation d'un respectif parmi l'élément filtrant (2), le moyen de nettoyage interne (4) et le moyen de nettoyage externe (3).

9. Filtre selon l'une quelconque des revendications précédentes, **caractérisé en ce que** l'élément filtrant (2) est cylindrique.

10. Filtre selon la revendication 9, **caractérisé en ce que** l'élément filtrant (2) est réalisé sous la forme d'au moins un disque en treillis.

11. Filtre selon l'une quelconque des revendications 1 à 8, **caractérisé en ce que** l'élément filtrant (2), ainsi que les moyens de nettoyage interne et externe (4, 3) sont configurés pour être déplacés par un mouvement de rotation d'un respectif parmi l'élément filtrant (2), le moyen de nettoyage interne (4) et le moyen de nettoyage externe (3).
